## Europäisches Patentamt

## European Patent Office

## Office européen des brevets

(19)

(11) Veröffentlichungsnummer: **0 032 736**
**A2**

(12) **EUROPÄISCHE PATENTANMELDUNG**

(21) Anmeldenummer: **81100311.0**

(22) Anmeldetag: **16.01.81**

(51) Int. Cl.³: **B 29 H 17/34**

(30) Priorität: **17.01.80 HU TA008480**

(43) Veröffentlichungstag der Anmeldung: **29.07.81**
**Patentblatt 81/30**

(84) Benannte Vertragsstaaten: **AT BE CH DE FR GB IT LI LU NL SE**

(71) Anmelder: **Taurus Gumiipari Vállalat, Kerepesi ut 17, Budapest VIII (HU)**

(72) Erfinder: **Gündisch, Gusztáv, Dipl.-Ing., Béla kir. ut.5., H-1125 Budapest (HU)**
Erfinder: **Gelencsér, Sándor, Dipl.-Ing., Batthányi u.6., H-1015 Budapest (HU)**
Erfinder: **Csáky, P. Roger, Dipl.-Ing., Tigris u.19., H-1016 Budapest (HU)**
Erfinder: **Tatai, Ilona Dr. Dipl.-Chem., Gvadányi u.109., H-1144 Budapest (HU)**

(74) Vertreter: **Patentanwälte Viering & Jentschura, Steinsdorfstrasse 6, D-8000 München 22 (DE)**

(54) Verfahren und Vorrichting zur Herstellung von bewickelten Ringen.

(57) Für die Herstellung bewickelter Drahtringe, insbesondere von Wulstkernen für Reifenwülste, wird der mit einem Wickeldraht (5) zu bewickelnde Kernring (8) dadurch angetrieben, dass er mit Hilfe eines Paares von Antriebsscheiben (11), die beidseitig des Kernringes (8) angeordnet sind und an ihrem Umfang im Abstand voneinander verteilte, unter Druck gegen den Kernring (8) gepresste Mitnehmerelemente (9) aufweist, periodisch nacheinander an in Umfangsrichtung des Kernringes (8) wandernden Stellen ergriffen wird, die beidseitig des Kernringes (8) einander jeweils paarweise gegenüberliegen. Die mittels eines Antriebszahnrades (1) um den Kernring (8) kreisend bewegte Wickeldrahtspule (2) ist an dem Zahnkranz (1) derart verdrehbar abgestützt, dass für ein torsionsfreies Aufwickeln des Wickeldrahtes (5) die Spulenachse (4) während des Umlaufs um den Kernring (8) horizontal bleibt.

Verfahren und Vorrichtung zur Herstellung von
bewickelten Ringen

Die Erfindung betrifft ein Verfahren und eine Vorrichtung zur Herstellung von bewickelten Drahtringen unterschiedlicher Querschnitte, insbesondere von Drahtringen, welche als Wulstkern von Reifenwülsten verwendet werden.

Es ist wohlbekannt, daß zur Verstärkung von Reifenwülsten verschiedene Drahtringe verwendet werden.

In letzter Zeit haben sich - insbesondere bei Reifen mit Radialstruktur - bewickelte Ringe mit einem Kreis- oder Ovalquerschnitt und dergleichen weitgehend verbreitet. Das wesentliche dieser Ringe besteht darin, daß ein fester Kernring mit einem Einzeldraht in einer geeigneten Gewindesteigung umwickelt wird, und zwar derart, daß der Kernring vollkommen umhüllt bzw. bedeckt ist.

Es ist weiter bekannt, daß zur Erzielung einer höheren Festigkeit der Kernring mit mehreren Wickelschichten umhüllt wird. In diesem Fall muß man dafür sorgen, daß jede einzelne Schicht aus derartigen Einzeldrähten aufgebaut ist, die unter einem dem Gewindesteigungswinkel der die vorangehende Schicht bildenden Einzeldrähte entgegengesetzten Gewindesteigungswinkel geführt sind.

Überdies wird der zur Herstellung der Drahtringe dienenden Vorrichtung die Aufgabe zugeteilt, eine dichte Textur der einzelnen Wickelschichten sicherzustellen, d.h. es darf zwischen den einzelnen Drahtwindungen keine Lücke vorhanden sein. Des weiteren soll die Vorrichtung den Einzeldraht in der Weise auf den Kernring führen, daß der Anfangspunkt und der Endpunkt des die Wickelschicht bildenden Einzeldrahtes nach Beendigung des Wickelvorgangs genau einander gegenüberliegen. Andernfalls könnte nämlich an dieser Stelle die lückenlose Passung der Drahtwindungen keineswegs gelöst werden, d.h. die erste und die letzte Drahtwindung würden einander teilweise überdecken, wodurch die aufgebrachte Schicht ungleichmäßig wird. Die zur Führung der Einzeldrähte dienenden Vorrichtungen der Maschine sollen daher sicherstellen, daß der Windungssteigungswinkel des die Bewicklung bildenden Einzeldrahtes hinsichtlich der Festigkeits- und Verformungseigenschaften optimal ist. Aus den gleichen Gesichtspunkten heraus ist es unerläßlich, die Dicke des die Bewicklung bildenden Einzeldrahtes innerhalb weiter Grenzen wählen zu können.

Die zur Herstellung des bewickelten Drahtringes dienenden, dem gegenwärtigen Stand der Technik entsprechenden Verfahren und Vorrichtungen sind nicht imstande, die gestellten Anforderungen zu befriedigen.

So z.B. beschreiben die DE-PS 1 778 542 und die US-PS 1 294 160 solche Vorrichtungen, bei denen keine Zwangskupplung zwischen der Bewegung des die Bewicklung bildenden Einzeldrahtes und der Bewegung des Kernringes besteht. Bei den erwähnten Vorrichtungen sind daher die kennzeichnenden Nachteile der gegenwärtig bekannten Lösungen vorhanden, d.h. weder die Dicke, die Gewindesteigung des Einzeldrahtes, noch der Durchmesser des bewickelten Drahtringes können innerhalb weiter Grenzen gewählt werden.

0032736

Um bewickelte Drahtringe mit unterschiedlichen Abmessungen und unterschiedlicher Gestaltung herstellen zu können, müssen zahlreiche, einander zugeordnete Wertpaare hinsichtlich der Umdrehungszahl des Kernringes und der Umdrehungszahl des die Schicht auf dem Kernring bildenden Einzeldrahtes verwirklicht werden. Diese Forderung kann mit den bekannten Vorrichtungen keineswegs befriedigt werden, so daß die einzelnen Vorrichtungen nur auf einem verhältnismäßig eng begrenzten Anwendungsgebiet eingesetzt werden können.

Aufgrund zahlreicher, in der Praxis durchgeführter Versuche und der Auswertung der bekannten Lösungen und Versuche haben die Erfinder gefunden, daß im Verlauf der Herstellung der bewickelten Drahtringe zur Beseitigung der sich aus dem Stand der Technik ergebenden Nachteile die folgenden komplexen Forderungen unerläßlich befriedigt werden müssen:

Der Wickeldraht ist derart zu führen, daß keine Torsionsspannung in ihm entsteht. Die aus dem Wickeldraht gebildeten Windungen müssen mit höchster Sorgfalt und Genauigkeit nebeneinander abgelegt werden. Während des Wickelns muß in dem Draht eine geringe Zugspannung erzeugt werden. Um einen optimalen Reifenwulstring herstellen zu können, ist es unerläßlich, daß der Windungssteigungswinkel und der Durchmesser des Drahtes beliebig gewählt werden können.

Es konnte festgestellt werden, daß die erste der angegebenen und gleichzeitig bestehenden Anforderungen - und zwar die Führung des Wickeldrahtes ohne die Entstehung einer Torsionsspannung - mit der weiter unten noch beschriebenen Art der Bewegung der Drahtspule während des Wickelns erfüllt werden kann, während die Erfüllung der anderen Anforderungen mit der Anordnung des Kernringes bzw. mit dessen Bewegung beim Wickeln zusammenhängt.

0032736

Die Erfindung beruht insbesondere auf der Erkenntnis, daß die zuletzt erwähnten Anforderungen nur dadurch verwirklicht werden können, daß der Kernring mit einer Umdrehungszahl angetrieben wird, die mit der gegebenen Aufgabe der Gestaltung eines Reifenwulstkernes in Einklang gebracht ist.

Gleichzeitig aber traten bei der Anwendung der oben erwähnten Theorie in der Praxis gewisse technische Schwierigkeiten auf. Die Form des anzutreibenden gewünschten Ringes ändert sich nämlich in Abhängigkeit von der Menge des in der gegebenen Zeit auf die Oberfläche des Kernringes geführten Wickeldrahtes, was auch die ständige Änderung des Ringdurchmessers mit sich bringt. Daraus folgt, daß sich die Winkelgeschwindigkeit des Kernringes mit der Zeit entsprechend ändert, wenn der Kernring mit Hilfe einer mit konstanter Geschwindigkeit angetriebenen, an ihm radial angreifenden Rolle gedreht wird. Da sich bei der Zuführung des Wickeldrahtes dessen Führungselemente mit konstanter Geschwindigkeit bewegen, könnte der Draht auf den sich mit veränderlicher Winkelgeschwindigkeit bewegenden Kernring nur mit einer sich ändernden Gewindesteigung geführt werden, was aber im Hinblick auf die Qualitätsanforderungen an das herzustellende Produkt nicht zulässig ist.

Eine weitere, theoretisch mögliche Lösung besteht darin, daß der Ring, dessen Abmessungen sich verändern, mittels Rollen derart angetrieben wird, daß die Winkelgeschwindigkeit konstant bleibt. In diesem Fall werden die Rollen zu beiden Seiten der ringförmigen Mittellinie des Kernringes angeordnet. Bei dieser Lösung muß man jedoch mit der Schwierigkeit rechnen, daß die Antriebsrollen zeitweise auf den mit einem geringen Steigungswinkel aufgebrachten Wickeldraht auflaufen müssen. Da der Steigungswinkel klein ist, stehen nur äußerst

0032736

kleine Kräfte für das Festhalten des Drahtes an der Oberfläche des Kernringes zur Verfügung (insbesondere, wenn der Wickeldraht nur einmal um den Kernring herumgeführt worden ist), so daß die Antriebsrollen über einen gewissen Ringabschnitt hin den Wickeldraht vor sich herschieben, d.h. den Steigungswinkel verändern. Dies hat seinerseits zur Folge, daß bei der nächstfolgenden Wickelschicht der Wickeldraht über einen deformierten Abschnitt der darunterliegenden Wickelschicht gewickelt wird.

Die Erfinder haben gleichermaßen erkannt, - und eben diese Erkenntnis bildet die Grundlage der Erfindung - daß die oben beschriebenen Mängel nur dadurch beseitigt werden können und das gesetzte Ziel nur dann erreicht wird, wenn der umlaufend anzutreibende gewünschte Ring an beiden Seiten seiner Ringebene nur an einzelnen, in verhältnismäßig großem Abstand voneinander liegenden Stellen ergriffen wird, da auf diese Weise ein Verzug der aus dem Wickeldraht gebildeten Drahtwindungen, falls er überhaupt auftritt, so gering ist, daß infolge der Elastizität des Materials die Windungen unmittelbar wieder in ihre Ausgangsstellung zurückfedern. Die Vorteile der erfindungsgemäßen Maßnahmen, daß mit einem angetriebenen Kernring gearbeitet wird, d.h. die Möglichkeit, daß für die Führung des Wickeldrahtes eine beliebige Gewindesteigung sichergestellt bzw. mit einer beliebigen Drahtdicke gearbeitet werden kann, können dadurch erreicht werden, daß der Antrieb des zu bewickelnden Kernringes im Sinne der Erfindung durchgeführt wird.

Demnach besteht das Wesen des erfindungsgemäßen Verfahrens darin, daß während der Zuführung des Wickeldrahtes der zu bewickelnde Kernring derart angetrieben wird, daß dieser in vorbestimmten Perioden an einander gegenüberliegenden Stellen ergriffen und durch Zug weiterbewegt wird und daß gleichzeitig die Umfangsgeschwindigkeit mit einer Periodizität eingestellt wird.

Durch die Anwendung des erfindungsgemäßen Verfahrens kann ein beliebiges Übersetzungsverhältnis zwischen der Bewegung des die Bewicklung bildenden Einzeldrahtes und der Bewegung des Kernringes erreicht werden, oder - als äquivalentes Ziel - ein Aufbau der Wickelschichten mit einem beliebigen Steigungswinkel erreicht werden, bei dem eine gewisse, zur Dichtigkeit der Wickelschicht unerläßliche Zugspannung in den Einzeldrähten entstehen kann.

Die zur Durchführung des erfindungsgemäßen Verfahrens geeignete Vorrichtung bildet ebenfalls einen Gegenstand der Erfindung.

Das wesentliche der erfindungsgemäßen Vorrichtung liegt insbesondere darin, daß diese Mittel aufweist, die zur torsionsfreien Zuführung des die Wickelschicht bildenden Einzeldrahtes geeignet sind, und sie außerdem mit einer Einheit versehen ist, die eine vorbestimmte und konstante Drehzahl des Kernringes, sowie die Einstellung einer einem beliebigen Kernring zugeordneten Drehzahl mit einfachen Mitteln sicherstellt.

Außer den an sich bekannten Trag- und Befestigungsmitteln sind bei der erfindungsgemäßen Vorrichtung zum Antreiben des Kernringes dienende, austauschbare Mitnehmerelemente vorgesehen, die beidseitig an dem Kernring angreifen und deren Halteböcke um ein Gelenk seitwärts hin und her bewegbar angeordnet sind. Außerdem sind Steuerbahnen und Abtastfühler vorhanden, die sicherstellen, daß die an jeder Seite des Kernrings im Abstand voneinander angeordneten Mitnehmerelemente während ihrer Antriebsbewegung der Krümmung des Kernringes folgen. Die Vorrichtung enthält außerdem einen zum Aufwickeln des Wickeldrahtes auf den Kernring angetriebenen Zahnkranz und einen an dem Zahnkranz gelenkig angeschlossenen, die in einer Gabel aufgehängte Drahtspule aufnehmenden Mechanismus.

Bei einer vorteilhaften Ausführungsform der erfindungsgemäßen Vorrichtung sind die Halteböcke der die vorzugsweise austauschbaren Mitnehmerelemente aufweisenden Antriebsscheiben über ineinandergreifende Zahnräder miteinander gekuppelt, so daß ihre synchrone seitliche Bewegung durch die ineinandergreifenden Zahnräder erreicht wird.

Die zum Anpressen der Antriebsscheiben mit ihren Mitnehmerelementen gegen den Kernring erforderliche Druckkraft wird vorzugsweise von Druckluftzylindern geliefert.

Die Erfindung wird anhand einer beispielhaften Ausführungsform erläutert, die aus der Zeichnung ersichtlich ist. In der Zeichnung zeigt:

Fig. 1    die Seitenansicht der Vorrichtung und

Fig. 2    die Stirnansicht der Vorrichtung.

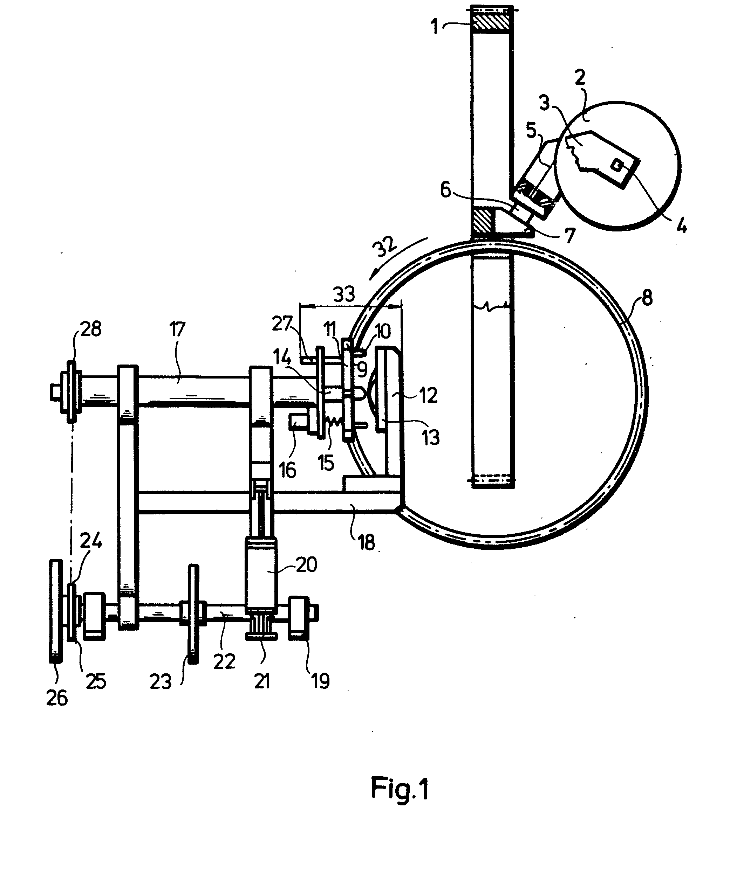

Wie aus Fig. 1 ersichtlich, ist zur Halterung und Zuführung des auf den Kernring 8 aufzuwickelnden Wickeldrahtes ein angetriebener ringförmiger Zahnkranz 1 vorgesehen, dessen Ringebene vertikal verläuft und welcher den Kernring 8 derart durchgreift, daß dessen ringförmige Mittellinie beim Durchgang durch den Zahnkranz 1 im wesentlichen mit dessen Achslinie zusammenfällt. In geringem Abstand von seinem Zentrum weist der ringförmige Zahnkranz 1 einen entlang einer Kreissehne des von dem Zahnkranz gebildeten Kreisringes verlaufenden Quersteg auf, der wenigstens annähernd in seiner Längsmitte einen seitlichen Haltebock 7 trägt, an welchem über einen Hohlzapfen 6, dessen Achse im Winkel zu der Ringebene und der Achse des Zahnkranzes 1 verläuft, eine etwa rechtwinklig abgewinkelte Gabel 3 zur drehbaren Halterung der den Wickeldraht enthaltenden Spule 2 um die Achse des Hohlzapfens 6 frei drehbar abgestützt ist. Der Winkel zwischen der Achse des Hohlzapfens 6 und der Ringebene des Zahnkranzes 1 beträgt bei der Ausführungsform nach Fig. 1 etwa 30°. Die Drahtspule 2 ist an den freien Enden der winkelförmigen Schenkel der Gabel 3 mittels ihrer Achsspindel 4 gebremst drehbar gelagert, so daß der durch den Hohlzapfen 6 auf den Kernring 8 geführte Wickeldraht 5 beim Umlauf des Zahnkranzes 1 mit gewisser Zugspannung gehalten ist.

Da die Gabel 3 um die schräge Achse des Hohlzapfens 6 frei drehbar ist und die Achsspindel 4 der Drahtspule 2 im Abstand von der Achslinie des Hohlzapfens 6 angeordnet ist, dreht sich bei der Drehung des Zahnkranzes 1 die Drahtspule 2 unter ihrem Gewicht und der auf sie einwirkenden Fliehkraft bei jeder Umdrehung des Zahnkranzes 1 unabhängig von dessen Drehzahl einmal um die Achse des Hohlzapfens 6, was zur torsionsfreien Aufwicklung des Wickeldrahtes 5 auf den Kernring 8 führt. Zwischen dem Innenumfang des Zahnkranzes 1 und dem die Spule 4 haltenden Quersteg des Zahnkranzes 1 ist ein für den Durchgang der Drahtspule 2 bei ihrer kreisenden Bewegung um den Hohlzapfen 6 hinreichend groß bemessener Raum vorhanden.

Für den Antrieb des Kernringes 8 sind zwei außerhalb des Zahnkranzes 1 beidseitig der Ringebene des Kernringes 8 angeordnete Antriebsscheiben 11 vorgesehen, deren Achsen somit parallel zu der Ringebene des Kernringes 8 im wesentlichen radial zu diesem verlaufen und welche jeweils an ihrem Umfang verteilt im Abstand voneinander angeordnete, über ihren Umfang vorstehende Mitnehmerelemente 9 aufweisen, die unter Druck an dem Kernring 8 angreifen.

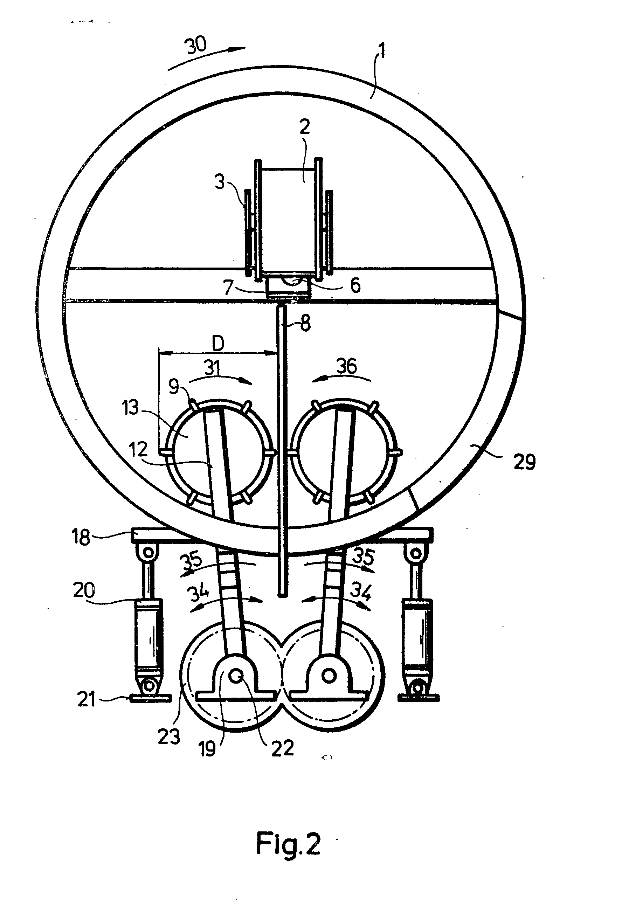

Die Mitnehmerelemente 9 sind entsprechend Fig. 2 derart an den Antriebsscheiben angeordnet, daß der Kernring 8 jeweils zwischen einander beidseitig der Ringebene des Kernringes 8 paarweise gegenüberliegenden Mitnehmerelementen 9 während der Drehung der Antriebsscheiben ergriffen wird.

Die Antriebsscheiben 11 sind gemäß Fig. 1 jeweils auf einem Zapfen 14 gelagert, der in einer zugeordneten Hohlwelle 17 axial zu dieser verschiebbar geführt ist und über das eine Ende derselben hinaussteht. An diesem Ende der Hohlwellen 17 ist jeweils ein radial abstehender Ringbund ausgebildet, in welchem jeweils ein an der zugehörigen Antriebsscheibe 11 sitzender Mitnehmerbolzen 27 parallel zu den Hohlwellen 17 verschiebbar geführt ist und an welchen Trägerhülsen 16 für Druckfedern 15 sitzen, die an der zugeordneten Antriebsscheibe 11 abgestützt sind und diese von der zugeordneten Hohlwelle 17 axial wegdrücken. Auf der anderen Seite der Antriebsscheiben 11 weisen diese jeweils mehrere stiftförmige Abtastfühler 10 auf, die sich auf zugeordneten axialen Kurvensteuerbahnen 13 abstützen, von welchen daher im Zusammenwirken mit den Druckfedern 15 die jeweilige Axialstellung der Antriebsscheiben 11 bestimmt wird. Die Hohlwellen 17 werden über auf ihnen sitzende Kettenräder 28 angetrieben.

Die Antriebsscheiben 9 sind über ihre Hohlwellen 17 jeweils in gestellartigen Halteböcken 18 abgestützt, an denen auch die zugeordneten Kurvenbahnen 13 mittels entsprechenden Haltearmen 12 abgestützt sind. Wie aus den Fig. 1 und 2 ersichtlich, sind die Halteböcke 18 jeweils um ein Gelenk 22 in einer senkrecht zur Ringebene des Kernringes 8 verlaufenden Ebene schwenkbar abgestützt und über jeweils ein Zahnrad 23 miteinander gekuppelt, dessen Achse mit der jeweiligen Achse des zugehörigen Gelenkes 22 zusammenfällt, so daß die

Halteböcke 18 und mit ihnen die Antriebsscheiben 11 eine synchron gegenläufig hin- und hergehende Schwingbewegung senkrecht zur Ebene des Kernringes 8 ausführen können. Jeder Haltebock 18 weist außerdem einen Hebelarm auf, an dem ein Druckluftzylinder 20 angelenkt ist, der seinerseits in einem ortsfesten Gelenk 21 schwenkbar abgestützt ist. Die Gelenke 22 werden von einer mit den Halteböcken 18 drehfesten Achse gebildet, auf der das zugeordnete Zahnrad 23 drehfest sitzt und die in den Lagerböcken 19 drehbar gelagert ist. Die Kettenräder 28 sind über Antriebsketten 24 mit auf den Achsen, von welchen die Gelenke 22 gebildet werden, gelagerten Antriebsketten 24 verbunden, die über entsprechende Antriebszahnräder 26 angetrieben werden.

Die gegen den Druck der Druckzylinder 20 hin und her schwenkbare Aufhängung der Antriebsscheiben 11 an ihren Halteböcken 18 führt dazu, daß der Drahtring 8 bei der Drehung der Antriebsscheiben 11 zuverlässig von deren Mitnehmerelementen 9 ergriffen wird, obwohl diese am Umfang der zugeordneten Antriebsscheibe 11 im Abstand voneinander verteilt angeordnet sind. Die entsprechend dem Verlauf der Kurvenbahn 13 erfolgende Hin- und Herverschiebung der Antriebsscheiben 11 führt dazu, daß jedes Mitnehmerelement 9, nachdem es auf den Kernring 8 aufgelaufen ist, mit der Stelle des Kernringes, an welcher es angreift, entsprechend der Krümmung des Kernringes 8 mitläuft und daher entsprechende Relativverschiebungen zwischen den Mitnehmerelementen 9 und dem Kernring 8 vermieden sind. Die Kurvenbahnen 13, von denen diese Verschiebebewegung der Antriebsscheiben 11 gesteuert ist, sind daher entsprechend in Abhängigkeit von dem Umfangsabstand der Mitnehmerelemente 9 auf den Antriebsscheiben 11 und dem Durchmesser des zu bewickelnden Kernringes 8 ausgebildet.

Aus Fig. 2 ist ersichtlich, daß der Zahnkranz 1 ein Segment 29 aufweist, welches entfernt werden kann. In die erfindungsgemäße Vorrichtung kann daher der Kernring 8 nach dem Auseinanderschwenken der Halteböcke 18 und der Antriebsscheiben 11 in Richtung der Pfeile 35 aus Fig. 2 und nach dem Öffnen des Zahnkranzsegmentes 29 eingesetzt werden. Der Wickelvorgang kann erst dann in Gang gesetzt werden, nachdem die Gestellkonstruktionen 18 in die ursprüngliche Stellung zurückgestellt sind, das Segment 29 geschlossen ist und der Wickeldraht 5 an dem Kernring 8 befestigt worden ist.

Im Verlauf der Zuführung des Wickeldrahtes 5 kreist die mit Hilfe des Haltebockes 7, des Hohlzapfens 6, der Gabel 3 und der Achsspindel 4 an dem Zahnkranz 1 aufgehängte Drahtspule 2 in Richtung des Pfeils 30 in Fig. 2 um den Kernring 8, und gleichzeitig um die Achse des Hohlzapfens 6, und zwar derart, daß die Achsspindel 4 während der Umdrehung stets annähernd horizontal bleibt, wodurch der Wickeldraht 5 torsionsfrei auf den Kernring 8 geführt werden kann.

Die Bewegung des Kernringes 8 in Richtung des Pfeils 32 in Fig. 1 mit einer im voraus bestimmten Drehzahl wird direkt von den austauschbaren Mitnehmerelementen 9 derart angetrieben, daß diese sich an bestimmten, sich wiederholenden Strecken der Bewegungsbahn des Kernringes 8 beidseitig an den Kernring 8 nacheinander anpressen und diesen mitnehmen.

Die zum Anpressen der austauschbaren Mitnehmerelemente 9 gegen den Kernring 8 erforderliche Kraft wird von den Druckluftzylindern 20 indirekt sichergestellt. Die Mitnehmerelemente 9 sind in den Antriebsscheiben 11 austauschbar eingebaut, die ihrerseits auf den verschiebbaren Zapfen 14 abgestützt sind. Die Antriebsscheiben 11 werden von den sich mit den Rohrwellen 17 drehenden Mitnehmerbolzen 27 angetrieben, so daß die Mitnehmerelemente 9, die Abtastfühler 10 und die Druckfedern 15 sich auf einer Kreisbahn bewegen.

Während die austauschbaren Mitnehmerelemente 9 den Kernring 8 in Bewegung setzen, müssen sie einerseits auf einer Kreisbahn kreisen, andererseits eine Bewegung in Richtung des Doppelpfeils 33 in Fig. 1 durchführen, um der Krümmung des Kernringes folgen zu können. Die in Richtung des Pfeils 33 stattfindende Bewegung wird von den entsprechend ausgestalteten Steuerbahnen 13 in Zusammenwirken mit den Abtastfühlern 10 und den Druckfedern 15 hervorgerufen, indem die Druckfedern die in den Antriebsscheiben eingebauten Abtastfühler 10 gegen die Steuerbahnen pressen, die entsprechend der Krümmung des Kernringes 8 gestaltet sind.

Sobald die austauschbaren Mitnehmerelemente 9 mit dem Kernring 8 in Berührung kommen, werden die damit verbundenen Bauelemente dazu gezwungen, gegen den Druck in den Druckluftzylindern 20 - bzw. unter Wirkung derselben - eine Schwingbewegung in der Richtung des Pfeils 34 in Fig. 2 durchzuführen. Die Pendelbewegung entsteht um die Mittellinie der Gelenkwellen 22, die entsprechend in den Lagerböcken 19 gelagert sind.

Wie oben bereits angeführt, sind bei der Herstellung von Drahtringen unterschiedlicher Abmessungen unterschiedliche Drehzahlen für den Kernring 8 erforderlich, falls die Drehzahl des Zahnkranzes 1 und sinngemäß die Wickeldrehzahl des Wickeldrahtes 5 um den Kernring 8 auf einem konstanten Wert gehalten werden soll.

Bei der erfindungsgemäßen Vorrichtung kann dieser konstante Wert durch Änderung des wirksamen Durchmessers D der Antriebsscheiben, d.h. durch den Austausch der austauschbaren Mitnehmerelemente 9 gegen andere Mitnehmerelemente geeigneter Abmessung aufrechterhalten werden, da ausschließlich auf diese Weise der
einfache, billige, dabei aber hinreichend veränderliche
Antrieb des Kernringes 8 erreicht werden kann.

Die wichtigsten Vorteile des erfindungsgemäßen Verfahrens bzw. der Vorrichtung sind die folgenden:

a) durch den Antrieb des Kernringes kann das Wickeln
der Wickelschicht unter einem beliebigen Steigungswinkel des Wickeldrahtes vorgenommen werden;

b) in dem die Wickelschicht bildenden Einzeldraht wird
eine Zugspannung erzeugt, durch welche die Dichtigkeit der Wickelwindungen geregelt werden kann;

c) unter Zuhilfenahme eines einfachen Mechanismus und
der Gravitationskraft führt die Vorrichtung die
steigungsrichtige, jedoch torsionsfreie Führung des
die Wickelschicht bildenden Einzeldrahtes durch;

d) mit Hilfe eines einfachen und verhältnismäßig billigen
Mechanismus wird der genaue Antrieb des Kernringes
mit einer sich ständig ändernden Konturdimension
ermöglicht;

e) die Änderung der Drehzahl des Kernringes kann mit
äußerst einfachen und billigen Mitteln vorgenommen
werden, da bei konstanter Drehzahl aller eine Drehbewegung ausführenden Elemente die Drehzahl des zu
bewickelnden Kernringes einfach durch den Austausch
der Mitnehmerelemente geändert werden kann.

Zur Anpassung an Kernringe mit unterschiedlichen Durchmessern können auch die Kurvensteuerbahnen 13 anstandshalber, und der Zahnkranz 1 relativ zu den Antriebscheiben 11 entsprechend verstellbar sein.

0032736

Patentansprüche

1. Verfahren zur Herstellung von bewickelten Ringen, insbesondere von Drahtringen als Wulstkern von Reifenwülsten, bei welchem ein Wickeldraht (5) um einen zu bewickelnden, in Umfangsrichtung angetriebenen Kernring (8) gewickelt wird, dadurch gekennzeichnet, daß der Kernring (8) während des Aufwickelns des Wickeldrahtes (5) dadurch angetrieben wird, daß er beidseitig seiner Ringebene periodisch nacheinander an in Umfangsrichtung des Kernringes (8) im Abstand voneinander angeordneten, in Umfangsrichtung des Kernringes wandernden Stellen ergriffen wird, die beidseitig des Kernringes jeweils paarweise einander gegenüberliegen.

2. Vorrichtung zur Herstellung von bewickelten Ringen, insbesondere von Drahtringen als Wulstkern von Reifenwülsten, zur Durchführung des Verfahrens nach Anspruch 1, mit einem Paar beidseitig der Ringebene des zu bewickelnden Kernringes (8) an diesem angreifenden, drehbar angetriebenen Antriebsscheiben (11) und mit einem die Drahtspule (2) für den Wickeldraht (5) halternden, den Kernring (8) durchgreifenden angetriebenen Zahnkranz (1), dadurch gekennzeichnet, daß die Antriebsscheiben (11) jeweils mit mehreren, über ihren Umfang vorstehenden, an ihrem Umfang gleichmäßig verteilt angeordneten Mitnehmerelementen (9), die unter Druck an dem Kernring (8) angreifen, versehen und jeweils periodisch um ein Gelenk (22) in einer senkrecht zur Ringebene verlaufenden Ebene gegenläufig hin und her verschwenkbar und mittels Steuerbahnen (13) und Abtastfühlern (10) parallel zur Ringebene gesteuert periodisch hin und her verschiebbar sind, und daß die Drahtspule (2) drehbar in einer Gabel (3) gelagert ist, welche an dem den Kernring (8) durchgreifenden angetriebenen Zahnkranz (1) derart um die Achse eines Hohlzapfens (6) verdrehbar abgestützt ist, daß die Achse (4) der Drahtspule (2) während des Umlaufs des Zahnkranzes (1) wenigstens annähernd horizontal bleibt.

3. Vorrichtung nach Anspruch 2, dadurch gekennzeichnet, daß die Mitnehmerelemente (9) an den Antriebsscheiben (11) auswechselbar befestigt sind.

4. Vorrichtung nach Anspruch 2 oder 3, dadurch gekennzeichnet, daß die Halteböcke (18) der Antriebsscheiben (11) über ineinandergreifende Zahnräder (23) gekuppelt sind, deren Achsen jeweils mit der Achse des zugeordneten Gelenkes (22) zusammenfallen.

5. Vorrichtung nach einem der Ansprüche 2 bis 4, dadurch gekennzeichnet, daß zum Anpressen der Antriebsscheiben (11) mit ihren Mitnehmerelementen (9) gegen den Kernring (8) pneumatische Zylinder (20) an den Halteböcken (18) der Antriebsscheiben (11) angreifen.

Fig.1

Fig.2